(19)

Europäisches
Patentamt
European
Patent Office
Office européen
des brevets

(11) **EP 2 073 519 A1**

(12) **EUROPEAN PATENT APPLICATION**

(43) Date of publication:
**24.06.2009 Bulletin 2009/26**

(51) Int Cl.:
*H04M 3/22* (2006.01)    *H04B 3/46* (2006.01)

(21) Application number: **07291581.2**

(22) Date of filing: **20.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Alcatel Lucent**
**75008 Paris (FR)**

(72) Inventors:
• **Maes, Jochen**
  **2431 Veerle (BE)**

• **Peeters, Michael**
  **1742 Ternat (BE)**
• **Guenach, Mamoun**
  **1930 Machelen (BE)**

(74) Representative: **Narmon, Gisèle Marie Thérèse et al**
**Alcatel-Lucent Bell NV**
**Copernicuslaan 50**
**2018 Antwerpen (BE)**

(54)    **Identification of pairs**

(57)    The present invention describes a method and associate structure agent to determine, in a transmission system, a quad structure within a cable binder that comprises a plurality of transmission lines. The method comprises a step of determining from measurements a crosstalk matrix that comprises crosstalk shapes. Each shape of the crosstalk matrix represents a measure of crosstalk of one line of the plurality of lines into another line of the plurality of lines, at multiple different frequencies. Furthermore the method further comprises the step a step of predefining at least one intra-quad crosstalk shape model for intra-quad lines. Such a model is representing a theoretical crosstalk value between a couple of predefined intra-quad lines at multiple different frequencies. Finally, the method comprises detecting in the crosstalk matrix a particular crosstalk shape that is correlating to one of the at least one model and providing thereby a matched shape. Hereby the couple of lines of the plurality of transmission lines that is associated to the matched shape forms the quad structure. (Figure 1).

Figure 1

**Description**

The present invention relates to a method to determine in a digital transmission system a structure of a cable binder.

Copper pairs between e.g. an access node and a plurality of subscribers, are often attached onto a line card of the access node in an uncontrolled way. There is often no information available to identify different twisted pairs that are located in a same binder. However, knowing the structure of a cable binder is important because of the network topology of a digital transmission system. Indeed this information is highly valuable for multiple purposes such as e.g. DSM3: identifying strong cross-talkers; or binder diagnosis: identifying and locating binder faults; or DLM: optimized parameter settings across lines within a binder; or phantom mode transmission: using multiple pairs for additional channel capacity

It has to be remarked that in the further description of this application it should be clear that two wires are forming one twisted pair and that one twisted pair is defined as one transmission line. The data transmission is performed via a differential signal on this pair, to avoid large amounts of egress and ingress noise.

Furthermore, it has to be explained that a quad is a cable type where four instead of two lines are twisted together in one unit. They can be used where two separate twisted pairs are used. The two pairs of a single quad can arrive at the same premises of an end-user. The use of quads can be advantage for boosting the capacity of copper pair binders. Indeed, this can be realized by using phantom mode channels. This channel is defined as the differential channel between the common mode channels of each of the constituent twisted pairs. However, due to the use of common mode channels, phantom mode channels can cause a large amount of egress noise. This can be avoided by choosing the pairs for such phantom mode channels being twisted together such as in quads. This creates a phantom mode with the same advantageous twisting as present in normal differential twisted pair channels.

Besides having the knowledge of a twisted pair belonging to a same binder, also the knowledge of twisted pair belonging to a same quad within a cable binder might be important. Indeed, knowing which twisted pair is located in which quad of a cable binder is advantageous for e.g. narrowing down the fault location search when a binder fault is identified across the quad, but not across other lines within the binder.

However, nowadays, there is no way to identify, which twisted pairs belong to a same quad within a cable binder without physically accessing the loop plant.

Furthermore, is has to be explained that estimation of crosstalk between communication lines connected to an access node is known in the art. Indeed, such a method is described in the European patent application with title "Crosstalk agent for access network nodes", filing date 23 *August 2004* and publishing date March 1, *2006 with* publication number 1630968. Herein it is described how a crosstalk agent in an access node gathers automatically quantitative information indicative for crosstalk coupling between a first line connected to the access node and further lines connected to the access node. Furthermore, the application describes how the crosstalk agent derives from the quantitative information a frequency dependent far end crosstalk transfer function between the first line and the further lines. The agent further comprises also a virtual binder means being adapted to group the line with some crosstalk affected lines, being part of the further lines, into virtual binders for memorization.

An object of the present invention is to provide a method to determine, in a transmission system a quad structure and related structure agent, without physically accessing the loop plant.

According to the invention, this object is achieved due to the following insight. Some operators use quad cabling in e.g. a section of their access network. As explained above, in such quad cabling, four copper wires are twisted simultaneously to form two twisted wire pairs. Such two twisted wire pairs have orthogonal electromagnetic fields. This reduces the crosstalk amplitude between the two pairs. However, the two pairs within a quad have a higher capacitance. This degrades the performance at higher frequencies and thus increases the crosstalk between the two lines composing the quad at higher frequencies. Compared to usual crosstalk e.g. crosstalk between inter-quad pairs i.e. two different quads, or crosstalk between closely spaced non-quad pairs, intra-quad crosstalk is typically lower at low frequencies, and higher at high frequencies. This leads to a distinct crosstalk shape that is very different to the shape of crosstalk between usual twisted pairs. When using known methods that describe the determination of Signal to Noise Ratio reporting, different crosstalk channel shapes for intra-quad twisted pairs have been measured and determined. These results are studied whereby it is confirmed that the shapes of intra-quads differ from normal shapes. Furthermore, a model has been found that describes the intra-quad shapes. Hereby, different intra quad shapes, for different couple of lines with different lengths and coupling factors within a quad are predefined. So, by performing measurements and reflecting the different crosstalk shapes for a plurality of twisted pairs in a binder in the field, and by detecting a correlating shape among the measured shapes and the predefined shapes, two pairs can be identified, exactly due to this correlation, as being located in a same quad of a same binder i.e. by using the predefined shapes as a signature on a distinct crosstalk shape being associated to a quad, two pairs are identified as being located within this same quad.

In this way, a method to determine, in a transmission system, a quad structure within a cable binder that comprises o plurality of transmission lines comprises a step of determining from measurements a crosstalk matrix. Such crosstalk matrix comprises crosstalk shapes whereby each shape represents a measure of crosstalk of one line of the plurality of lines into another line of the plurality of lines, at multiple different frequencies. The method comprises furthermore a step of predefining at least one intro-quad crosstalk shape model for intra-quad lines. Such a model represents a theoretical crosstalk value between a couple of predefined intra-quad lines at multiple different frequencies. Defining these values can be done e.g. in advance i.e. before the system becomes operational. However, the present application is not limited to such an implementation. Furthermore, the method comprises, e.g. at operational time of the system, detecting in the crosstalk matrix a crosstalk shape that correlates to one predefined model of the at least one models and providing thereby a matched shape. The couple of lines of the plurality of lines that is associated to the detected matched shape forms hereby the quad structure. This means that this couple of lines is located and forms together the quad structure within the binder.

A further characteristic feature of the present invention is that the theoretical crosstalk value is expressed as a power transfer function whereby the function is defined as being proportional to the fourth power of the frequency.

A further characterizing embodiment of the present applications is that the theoretical crosstalk value is expressed as a power transfer function whereby the function is predefined to be proportional to the square of the common length of said couple of lines.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

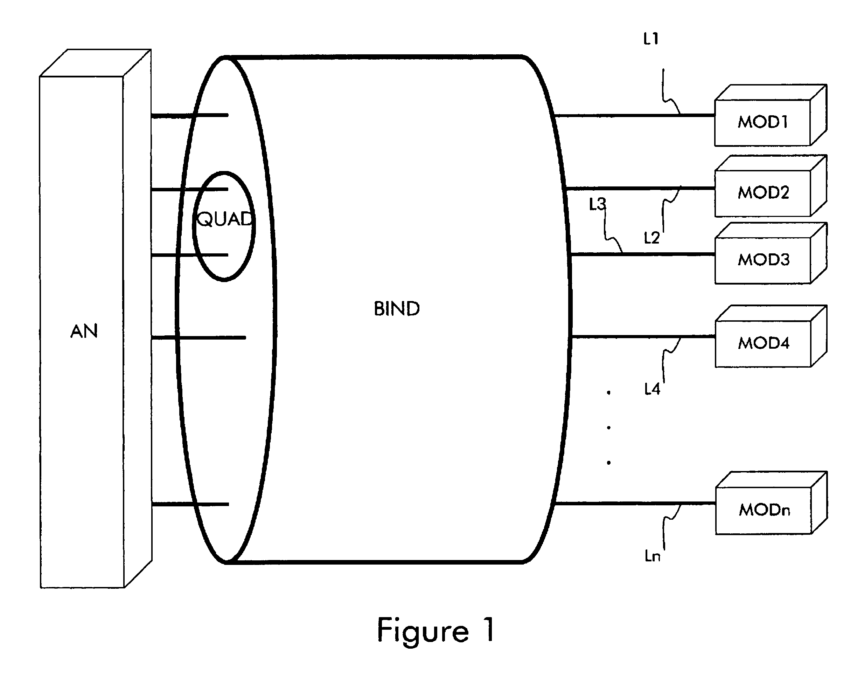

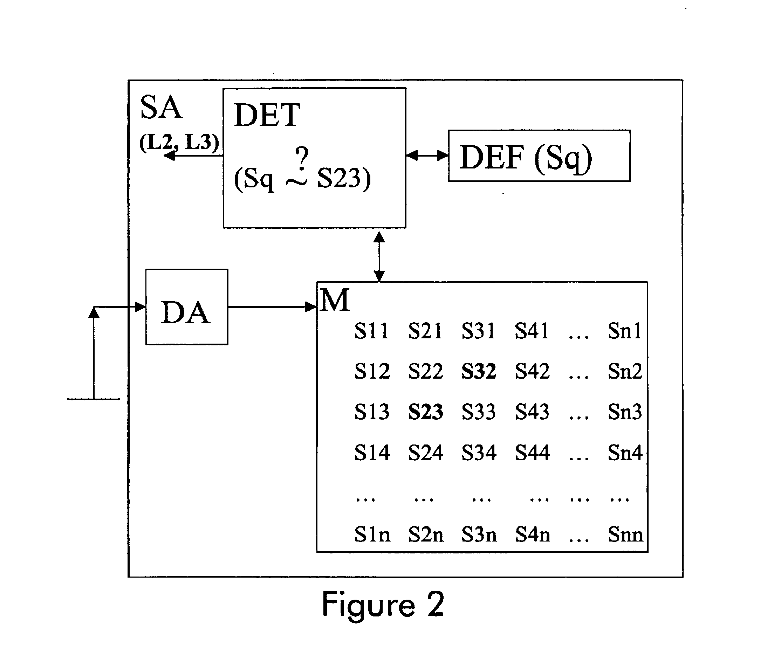

The above and other objects and features of the invention will become more apparent and the invention itself will be best understood by referring to the following description of an embodiment taken in conjunction with the accompanying drawings wherein Figure 1 represents an transmission system in an access network and Figure 2 represents a structure agent, according to the present application.

The working of the device according to the present invention in accordance with its telecommunication environment that is shown in Figure 2 will be explained by means of a functional description of the different blocks shown therein. Based on this description, the practical implementation of the blocks will be obvious to a person skilled in the art and will therefor not be described in details. In addition, the principle working of the method to determine a quad structure will be described in further detail.

Referring to Figure 1, a transmission system is shown. The transmission system comprises an access node AN which is coupled via a plurality of transmission lines L1, L2, L3, L4, ....,Ln within a binder BIND to a plurality of modems MOD1, MOD2, MOD3, MOD4, ... MODn. It has to be explained that the different transmission lines are coupled in the Access Node to a line card in an uncontrolled way.

Furthermore, it has to be noticed that although Figure 1 shows transmission lines of an identical length, it is clear to a person skilled in the art that this is not requirement. Indeed, the aim for the present application is that the different transmission lines are collocated in a same physical binder for at least a common part of their lengths.

Within the binder BIND a couple of lines are twisted together in a quad QUAD. However, this information is unknown to the system and operator i.e. although it is suspected or known that the binder BIND comprises a quad, it is unknown to the operator at the access node or at the premises equipment which lines exactly could be part of that quad. The quad structure within the cable binder BIND is unknown. In Figure 1 it is shown that line 2 L2 and line 3 L3 are included in the quad QUAD. The method to determine these lines will now be further explained.

Figure 2 describes a structure agent SA. Such a structure agent SA can be integrated in or connected to the access node AN of Figure 1.

The structure agent SA comprises a determining agent DA coupled to a crosstalk matrix M and a predefiner DEF which is coupled between a detector DET and the crosstalk matrix M. The determining agent DA is coupled to a first interface of the structure agent SA and the detector DET is coupled to a second interface of the structure agent DA.

The determining agent DA is included to determine from measurements the crosstalk matrix M. These measurements can be derived from e.g. a Management Information Database MIB of the access node AN. Such a MIB and the gathering, by a crosstalk agent, of quantitative information indicative for crosstalk coupling between e.g. a first line connected to the access node AN and a further line connected to the access node AN is described in the above referred European patent application. When applying this information gathering system and hereby coupling such a crosstalk agent to the determining agent DA of structure agent SA, the determining agent DA is enabled to build up the crosstalk matrix M.

The crosstalk matrix M is in fact a database or a memory that comprises crosstalk shapes such as $S_{ij}$ whereby each shape $S_{ij}$ represents a measure of crosstalk of one line $L_j$ of the plurality of lines into another line $L_i$ of the plurality

of lines, at multiple different frequencies.

The predefiner DEF(Sq) is included to predefine at least one intra-quad crosstalk shape model Sq for intra-quad lines, whereby such a model represents a theoretical crosstalk value between a couple of predefined intra-quad lines at multiple different frequencies.

It has to be explained here that based upon previous measurements for intra-quad lines, different shapes such as the above-described shapes were determined for different frequencies and different common lengths i.e. a common part of its respective length of a couple of lines in a quad. It was established that the intra-quad crosstalk shapes were different from the inter-quad pairs or crosstalk between closely spaced non-quad pairs. After further analyzing of the crosstalk within a quad it was further established that in general all intra-quad crosstalk is high in amplitude. However, they are not necessarily the strongest cross talkers in the binder. At frequencies below 15 MHz, the symmetry properties introduced by the quad twisting itself reduces the intra-quad crosstalk and balances out the increase in crosstalk due to the vicinity between the two pairs in the quad. At this frequency it was seen that the intra-quad cross talk level was comparable to inter-quad crosstalk of closely spaced non-quad pairs. So, in this way it was determined that quad twisting has a neutral effect on crosstalk magnitude below 15 MHz. Above 15 MHz the intra-quad crosstalk dominates. At 30 MHz, almost all intra-quad cross talkers are between 0dB and 5 dB stronger than the strongest inter-quad cross talker. Fitting the intra-quad crosstalk data, when being expressed as a power transfer function, and for a given common cable length of the quad-lines, shows that the crosstalk goes linear with the power transfer function of the direct channels. Further investigations made clear the crosstalk goes as f^4 i.e. proportional to the fourth power of the frequency, instead of f^ 2 as is the case for the normal cross talkers. Furthermore, comparison of the datasets for different coupling lengths and gauges leaded to the conclusion that there was no clear dependency on the wire gauge, but that the dependency on the coupling length was quadratic. Therefore, the intra-quad crosstalk channel is characterized by:

$$H_{FEXT,quad}(f,d) = H_{channel}(f,d) \cdot f^4 \cdot d^2 \cdot \kappa_{quad}$$

Herein, $H_{FEXT,quad}(f,d)$ is the power transfer function of the FEXT, $H_{channel}(f,d)$ is the power transfer function of the direct channel, with further more f the frequency, d is the common length of the couple of lines in the quad and $\kappa_{qund}$ a coupling factor.

Here below the predefined intra-quad crosstalk shape model Sq for intra-quad lines is shown. The model represents a theoretical crosstalk value between a couple of predefined intra-quad lines at multiple different frequencies. The proposed intra-quad crosstalk model is shown here below i.e. plotted bold on top of the data.

FT4 200m quad only

It also has to be remarked that it was determined as well that two intra-quad lines have similar mutual shapes.

Finally, the detector DET is included in the structure agent to detect in the crosstalk matrix M a crosstalk shape that is correlating to one of the at least one model Sq and to provide thereby a matched shape e.g. S23 that is associated to a couple of lines L2, L3 of the plurality of transmission lines. Finally, when the match is indeed determined, it is concluded that the associated couple of lines forms in act a quad structure.

The principle working of the method to determine a quad structure will now be described in further detail.

The method comprises a step of determining from the above described measurements by the determining agent DA the crosstalk matrix M which comprises the above described crosstalk shapes Sij. In this way the shapes such as e.g. S11, S21, S31, S41, ... , Sn1, S12, S22, S32, S42, ... , Sn2, S13, S23, 533, 543, ... , Sn3, S14, 524, 534, 544, ... , Sn4, ..., S1n, S2n, S3n, S4n, ... , Snn were determined for the described transmission lines included in the cable binder BIND.

Here before, at least one intra-quad crosstalk shape model Sq for intra-quad lines has been defined by means of the predefiner (DEF) such as described above. The determined model Sq is stored in the predefiner (DEF).

The method finally comprises the step of detecting by the detector (DET) in the crosstalk matrix M, a crosstalk shape Sij that correlates to one of the at least one model Sq. This means that the detector fetches the characteristics of one of the at least one model shapes Sq from the predefiner DEF; and fetches the characteristics of one of the shapes e.g. 523 of the crosstalk matrix M and compares consequently the distinct values i.e. compares the shape of both curves i.e. detection of possible correlation. This is shown in Figure 2, as a matter of example, by: $Sq \cong S23$ $ In the event when a match is detected the Detector DET provides thereby a matched shape (e.g. 523. This matched shape S23 is associated to a couple of lines e.g. L2 and L3 of the plurality of transmission lines. Due to the knowledge of the predefined model, it is known that these two lines are forming hereby a quad structure.

Finally it has to be remarked that since 523 is providing a match with Sq, it is known that 532 would provide a match as well. However, this additional match can be controlled as a matter of confirmation step in the present method to determine a quad structure.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

**Claims**

1.  A method to determine, in a transmission system, a quad structure within a cable binder (BIND) that comprises a plurality of transmission lines (L1, L2, L3, L4, ..., Ln), said method comprises a step of determining from measurements a crosstalk matrix (M) comprising crosstalk shapes (Sij), each shape (Sij) representing a measure of crosstalk of one line (Lj) of said plurality of lines into another line (Li) of said plurality of lines, at multiple different frequencies, **characterized in that** said method further comprises the steps of:

    - predefining at least one intra-quad crosstalk shape model (Sq) for intra-quad lines, said model representing a theoretical crosstalk value between a couple of predefined intra-quad lines at multiple different frequencies; and
    - detecting in said crosstalk matrix (M) a crosstalk shape being correlating to one of said at least one model (Sq); and providing thereby a matched shape (S23) being associated to a couple of lines (L2, L3) of said plurality of transmission lines and which are forming thereby said quad structure.

2.  The method according to claim 1, **characterized in that** said theoretical crosstalk value being expressed as a power transfer function whereby said function being proportional to the power transfer function of the direct channel multiplied by the fourth power of the frequency.

3.  The method according to claim 1 or claim 2, **characterized in that** said theoretical crosstalk value being expressed as a power transfer function whereby said function being proportional to the proportional to the power transfer function of the direct channel multiplied by the square of the common coupling length of said couple of lines (L2, L3).

4.  A structure agent (SA) for integration in or connection to an access node (AN) in a transmission system, to determine a quad structure within a cable binder (BIND) that comprises a plurality of transmission lines (L1, L2, L3, L4, ..., Ln), said structure agent (SA) comprises a determining agent (DA) to determine from measurements a crosstalk matrix (M) comprising crosstalk shapes (Sij), each shape (Sij) representing a measure of crosstalk of one line (Lj) of said plurality of lines into another line (Li) of said plurality of lines, at multiple different frequencies, **characterized in that** said structure agent (SA) further comprises :

    - a predefiner (DEF) to predefine at least one intra-quad crosstalk shape model (Sq) for intra-quad lines, said model representing a theoretical crosstalk value between a couple of predefined intra-quad lines at different frequencies; and
    - a detector (DET), coupled between said predefiner (DEF) and said crosstalk matrix (M), to detect in said crosstalk matrix (M) a crosstalk shape that correlates to one of said at least one model (Sq) and to provide thereby a matched shape (S23) being associated to a couple of lines (L2, L3) of said plurality of transmission lines which are forming thereby said quad structure.

Figure 1

Figure 2

European Patent
Office

**EUROPEAN SEARCH REPORT**

Application Number

EP 07 29 1581

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,Y | EP 1 630 968 A (CIT ALCATEL [FR])<br>1 March 2006 (2006-03-01)<br>combined with citation 2 or 3<br>* the whole document * | 1-4 | INV.<br>H04M3/22<br>H04B3/46 |
| Y | US 2007/036340 A1 (RHEE WONJONG [US] ET AL) 15 February 2007 (2007-02-15)<br>combined with citation 1<br>* abstract; figures 1,2,4b,6 *<br>* paragraph [0007] - paragraph [0009] *<br>* paragraphs [0032], [0046] *<br>* paragraph [0062] - paragraph [0065] *<br>* paragraph [0077] - paragraph [0079] * | 1-4 | |
| Y | JIRI VODRAZKA ET AL: "Modeling of Middle-range Metallic Lines for Ethernet with VDMT"<br>SYSTEMS, SIGNALS AND IMAGE PROCESSING, 2007 AND 6TH EURASIP CONFERENCE FOCUSED ON SPEECH AND IMAGE PROCESSING, MULTIMEDIA COMMUNICATIONS AND SERVICES. 14TH INTERNATIONAL WORKSHOP ON, IEEE, PI,<br>1 June 2007 (2007-06-01), pages 265-268, XP031159608<br>ISBN: 978-961-248-036-3<br>combined with citation 1<br>* page 265 - page 268 * | 1-4 | TECHNICAL FIELDS SEARCHED (IPC)<br><br>H04M<br>H04B |

The present search report has been drawn up for all claims

| Place of search | Date of completion of the search | Examiner |
|---|---|---|
| Munich | 2 June 2008 | Ohanovici, Z |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 07 29 1581

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2008

| Patent document cited in search report | | Publication date | Patent family member(s) | | Publication date |
|---|---|---|---|---|---|
| EP 1630968 | A | 01-03-2006 | CN | 1741406 A | 01-03-2006 |
| | | | US | 2006039456 A1 | 23-02-2006 |
| US 2007036340 | A1 | 15-02-2007 | AU | 2006245450 A1 | 16-11-2006 |
| | | | CA | 2608329 A1 | 16-11-2006 |
| | | | EP | 1886480 A1 | 13-02-2008 |
| | | | WO | 2006120513 A1 | 16-11-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1630968 A